(19) Europäisches Patentamt / European Patent Office / Office européen des brevets

(11) **EP 3 937 117 B1**

(12) **EUROPEAN PATENT SPECIFICATION**

(45) Date of publication and mention of the grant of the patent:
**22.05.2024 Bulletin 2024/21**

(21) Application number: **21194998.7**

(22) Date of filing: **23.06.2017**

(51) International Patent Classification (IPC):
$G06T\ 1/00$ (2006.01)  $H03M\ 13/37$ (2006.01)
$H03M\ 13/35$ (2006.01)  $H03M\ 13/13$ (2006.01)
$H03M\ 13/11$ (2006.01)  $H03M\ 13/29$ (2006.01)
$H04L\ 9/40$ (2022.01)

(52) Cooperative Patent Classification (CPC):
**H04L 63/1475; H03M 13/353; H03M 13/3707;**
H03M 13/1102; H03M 13/13; H03M 13/2957

(54) **METHOD AND SYSTEM FOR TRANSMITTING AND/OR RECEIVING MESSAGES VIA IDENTIFICATION**

VERFAHREN UND SYSTEM ZUM ÜBERTRAGEN UND/ODER EMPFANGEN VON NACHRICHTEN ÜBER IDENTIFIKATION

PROCÉDÉ ET SYSTÈME DE TRANSMISSION ET/OU DE RÉCEPTION DE MESSAGES AU MOYEN D'IDENTIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.01.2022 Bulletin 2022/02**

(62) Document number(s) of the earlier application(s) in accordance with Art. 76 EPC:
**17177595.0 / 3 418 970**

(73) Proprietor: **Technische Universität München 80333 München (DE)**

(72) Inventors:
• **BOCHE, Holger 10318 Berlin (DE)**
• **DEPPE, Christian 33699 Bielefeld (DE)**

(74) Representative: **Hoefer & Partner Patentanwälte mbB**
**Pilgersheimer Straße 20**
**81543 München (DE)**

(56) References cited:
• **AHLSWEDE R ET AL: "Identification via wiretap channels", INFORMATION THEORY, 1994. PROCEEDINGS., 1994 IEEE INTERNATIONAL SYMPOS IUM ON TRONDHEIM, NORWAY 27 JUNE-1 JULY 1994, NEW YORK, NY, USA,IEEE, 27 June 1994 (1994-06-27), page 352, XP010135016, DOI: 10.1109/ISIT.1994.394666 ISBN: 978-0-7803-2015-4**
• **RUDOLF AHLSWEDE ET AL: "Identification via Channels", IEEE TRANSACTIONS ON INFORMATION TH, IEEE PRESS, USA, vol. 198901, 1 January 1989 (1989-01-01), pages 15-29, XP007913244, ISSN: 0018-9448**

EP 3 937 117 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention refers to a method and a system for transmitting and/or receiving messages via identification, in particular in an environment of registered transmitting and receiving sites.

In the field of transmitting and/or receiving messages by identification the paradigm by Shannon which resides on (i) transmitting a desired message as such from the transmitting site and (ii) detecting the respective message at a receiver site is skipped. Instead, it has been proposed to use the concept of identification for transmitting/receiving messages. In other words, a code representative for a selected message is sent from the transmitting site, and the receiving site is configured to decide whether or not a message selected at the receiving site or a code therefore has been transmitted. By these measures introduced by Ahiswede and Dueck already in 1989, the channel capacity is increased in a double exponential manner.

It is an object underlying the present invention to improve transmission/receiving of messages by identification in view of its robustness and security aspects.

The object is achieved by a method for transmitting messages according to independent claim 1, which define the scope of protection. Any examples and technical descriptions of apparatuses, products and/or methods in the description and/or drawings not covered by the claim are presented not as embodiments of the invention but as background art or examples useful for understanding the invention.

According to a first aspect of the present invention a method of transmitting and/or receiving messages in an environment of registered transmitting sites and receiving sites via identification is provided. According to the present invention a respective message is selected from a fixed set of messages - which may in particular be finite - and which is sent and/or received over a compound channel via identification. In addition according to the present invention, the compound channel - as a set of channels and ruled by a state variable - is given and used based on a compound code by using a stochastic encoder.

According to a preferred embodiment of the present invention for identifying at a transmitting site a message to be sent and selected from the set of messages an identification code may be used which is generated based on said compound code by using a stochastic encoder.

This may in both cases be done in order to randomly select at the transmitting site a code for the message selected from the set of messages.

Additionally or alternatively for re-identifying at a receiving site whether a message corresponding to a code received at the receiving site is identical to a certain message selected from the set of messages at the receiving site an identification code or said identification code mentioned before may be used which is generated based on said compound code by using a stochastic encoder or said stochastic encoder.

In order to realize a respective stochastic encoder and/or a decoder, a variety of measures may be taken.

For instance and following a preferred embodiment of the present invention, at a transmitting site for a respective message selected said stochastic encoder may be configured in order to randomly assign thereto as a code for the message a value of a random variable within an assigned probability distribution, and the assigned code may be transmitted via the compound channel.

Additionally or alternatively, at a receiving site it may be checked whether a respective code received at the receiving site and referred to as a value of a random variable is within a probability distribution assigned to a respective message selected at the receiving site.

Under such circumstances, it may be recognized (i) that the respective message selected at the receiving site has been sent by a transmitting site and otherwise (ii) that the respective message has not been sent by the transmitting site. Thereby, the identification paradigm is realized in contrast to the channel in principle of identifying the sent message as such.

According to the present invention provable security can be achieved.

In order to gain such an object it is preferred that at a transmitting site a channel quality of a respective individual channel of the compound channel or of the compound channel in its entirety is monitored, in particular by observing the mutual information or trans-information between individual channels for a dedicated receiving site and individual channels for a non-dedicated receiving site, for a wiretapper entity and/or by deriving therefrom a representative channel security parameter.

In the following the notions non-dedicated receiving site, non-legitimate receiving site, wiretapper and eavesdropper may be used as synonyms.

Different physical observables may be used as a basis for deriving a respective channel security parameter.

According to another preferred embodiment of the present invention, the channel security parameter may be used as a basis for ruling the processing at a transmitting site.

In particular a process of sending a message selected at a transmitting site may be suppressed and/or postponed in case that the channel security parameter indicates that a secure transmission is not possible.

According to a further preferred embodiment of the method for transmitting and/or receiving messages, a secrecy transmission capacity may be used as a channel security parameter.

This parameter may indicate a possible secure transmission in case that it has a value larger than 0.

Based on the said channel security parameter a stochastic encoder or a set thereof may be chosen at a respective transmitting site.

Additionally or alternatively, a decoder or a set thereof may be chosen at a respective receiving site also based on said channel security parameter, wherein in particular a decoder at a receiving site may be formed according to the specification of a corresponding stochastic encoder at a transmitting site and may be deterministic.

Additionally or alternatively, a respective encoder and/or a respective decoder may be based on the nature of the compound channel and/or may be based on any one of LDPC codes, polar codes, turbo codes, and raptor codes.

At a receiving site a decoder may be formed by a family of pairwise non-disjunct decoder sets.

For securing a message (i) selected at the transmitting site and (ii) to be sent to a dedicated receiving site and its code against wiretapping by wiretapping entities and in particular by notdedicated receiving sites a wiretap code may be constructed and used.

This may be done in order to thereby define and transmit at a transmitting site a coloring for the message or its code to be sent.

It is of particular advantage, if a respective encoder and/or decoder is formed based on a family of code books.

A respective instance of a code book may be chosen randomly and/or based on a respective channel security parameter as mentioned above.

The present invention further relates to a system for transmitting and/or receiving messages in an environment of registered transmitting sites and receiving sites via identification. The system is configured in order to perform or in order to be used in a method of transmitting and/or receiving messages in an environment of registered transmitting sites and receiving sites via identification according to the present invention.

Previously and in the following, a transmitter or transmitting site may be identified with an encoder, whereas a receiver or a receiving site may be identified with a decoder in the sense of the present invention.

In addition, the notions of probabilistic, random, and stochastic encoders may be used as synonyms in the sense of the present invention.

Further on, the notions mutual information and trans-information are used as synonyms, too.

It is inter alia a gist of the present invention to achieve in methods and systems for transmitting and/or receiving messages via identification an improved degree of robustness and security.

One key measure in order to realize this object - besides the usage of a compound channel - envisages involving a stochastic encoder.

According to a further aspect of the present invention, the concept of stochastic encoders is used in a threefold manner, namely in order to achieve robustness, to realize identification, and to guarantee secrecy of the transmitted information.

Using a stochastic encoder means that at least a transmitting site is capable of randomly selecting an element according to a certain distribution.

(1) For achieving robustness, a stochastic encoder is used in order to generate a compound code. This is necessary as within the concept of compound channel the transmitting site is not capable of knowing which channel within the class of channels defining the compound channel is actually being used.

(2) For realizing identification, a stochastic encoder is used in order to generate from the compound code an identification code. The stochastic encoder is used in order to randomly choose an element from a given set of elements.

(3) For guaranteeing secrecy in the process of transmitting and/or receiving messages, a stochastic encoder is used in order to generate the wiretap code. In this manner, the stochastic encoder is used in order to secure a message to be transmitted against wiretappers. The wiretap code is used as a second fundamental code in order to keep the message to be identified secret. This may also be referred as a coloring in connection with the message or its code to be transmitted.

These and further details, advantages and features of the present invention will be described based on embodiments of the invention and by taking reference to the accompanying figures.

Figure 1 is a block diagram elucidating general aspects of the method according to the present invention configured for transmitting and/or receiving a message or in general a data signal.

Figure 2 is a block diagram showing a schematic representation of communication in the sense of Shannon with the transmission of a message as such.

Figure 3 is a block diagram showing a schematic representation of communication by identification in the sense of the present invention.

Figure 4    is a block diagram showing a schematic representation of a compound channel in the sense of the present invention.

Figure 5    is a block diagram showing a schematic representation of a compound wiretap channel in the sense of the present invention.

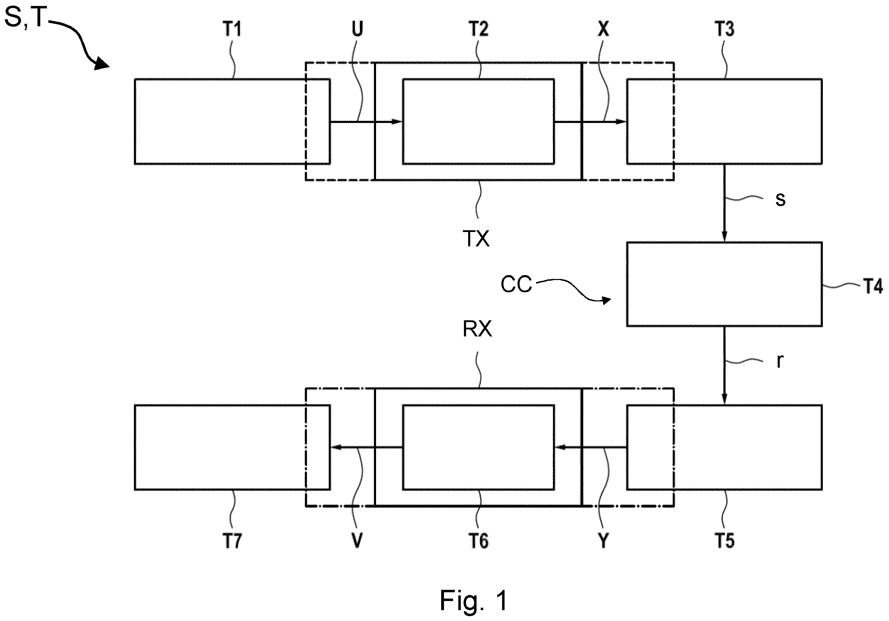

In the following embodiments and the technical background of the present invention are presented in detail by taking reference to accompanying figures 1 to 5. Identical or equivalent elements and elements which act identically or equivalently are denoted with the same reference signs. Not in each case of their occurrence a detailed description of the elements and components is repeated.

The scheme according to the block diagram of figure 1 generally follows the concept of coding/decoding and modulation/demodulation in digital communication proposed in 1974 by Massey.

The scheme of figure 1 discloses a system T - being it a hardware structure, a configuration of a method or of processing units or a combination thereof - comprising

(i) an information source unit T1 configured to provide a signal U to be converted and transmitted, an

(ii) encoding unit T2 configured to receive and encode the signal U and to output an encoded signal X,

(iii) a modulator unit T3 configured to receive and modulate the encoded signal X and to output a modulated signal s(t) for transmission over

(iv) a transmission/reception waveform channel unit T4,

(v) a demodulator unit T5 configured to receive the modulated signal s(t) in a form r(t) possibly distorted by the transmission channel unit T4 and to demodulate said signal in order to output a demodulated signal Y,

(vi) a decoder unit T6 configured to receive and decode the demodulated signal Y and to output the decoded signal V, and

(vii) an information sink unit T7 configured to receive the decoded signal V.

Key aspects of the present invention are situated in the encoding unit T2 and decoding unit T6 also to be seen in connection with respective embracing transmitter TX and receiver RX for transmitting and receiving, respectively, data signals and in particular messages or codes therefore.

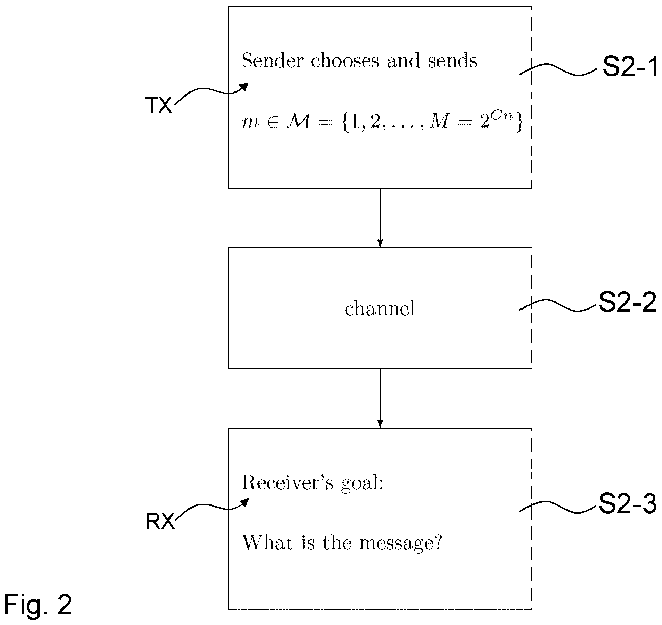

Figure 2 is a block diagram showing a schematic representation of communication in the sense of Shannon with the transmission of a message m as such.

Figure 2 therefore represents the classical paradigm of communication, wherein in a first section S2-1 of the processing shown in figure 2 a message m is selected from a set $M$ of messages such that formally the expression $m \in M = \{1, 2,..., M = 2^{Cn}\}$ is fulfilled.

According to section S2-2 the selected message $m$ as such is transmitted through a channel and at a receiver site represented by section S2-3 the received message $m'$ as such is identified.

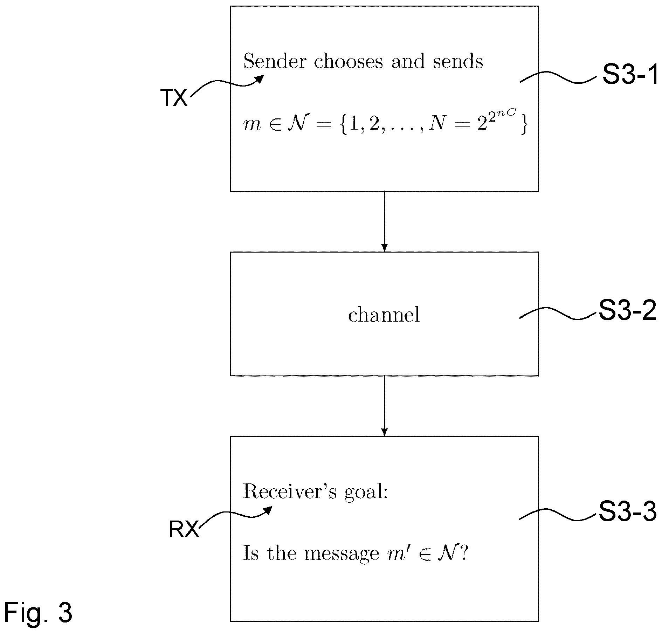

In contrast thereto, figure 3 is a block diagram showing a schematic representation of communication by identification in the sense of the present invention and therefore represents the new paradigm of communication.

As shown in connection with section S3-3, a receiver site does not explicitly detect the message m selected and sent by a transmitting site indicated by section S3-1, but instead obtains information about whether or not a message m' selected at the receiver site has been sent by the transmitting site and communicated through the channel indicated by section S3-2.

The new scheme of communication by identification

Besides the change of paradigm from detecting a message sent to detecting whether or not a selected message has been sent, i.e. the change to communication by identification, the change to an alternate form of channel is a crucial point for the present invention, namely the usage of a so-called compound channel CC.

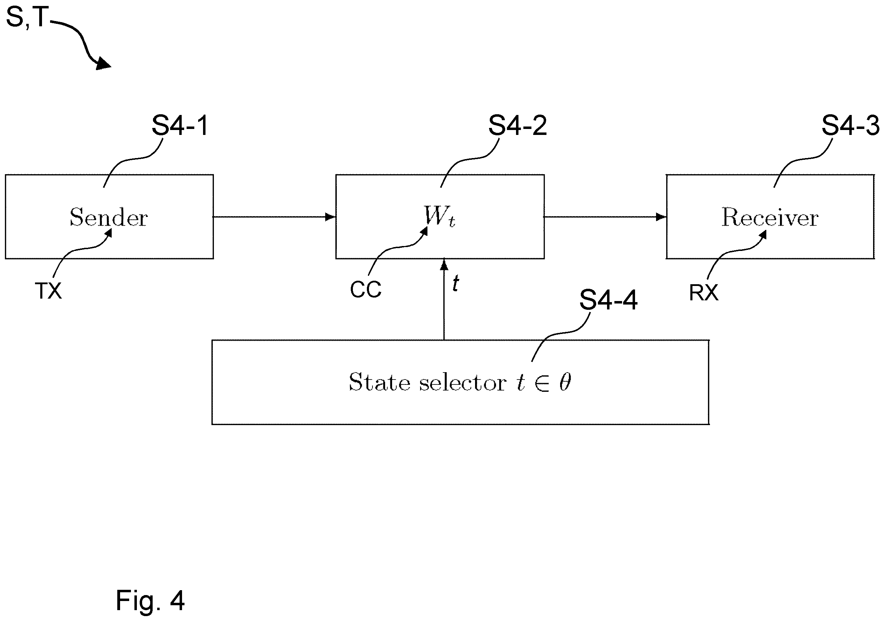

Figure 4 is a block diagram showing a schematic representation of a compound channel CC in the sense of the present invention.

Section S4-1 represents the environment of a transmitter or transmitting site TX, whereas section S4-3 represents the environment of a receiver or receiving site RX. The transmitting site TX and the receiving site RX are connected by a so-called compound channel CC which is represented by section S4-2 and comprises a set or family of concrete channels which are selectable by the action of a state selector represented by section S4-2, wherein each state $t$ of a given set $\theta$ of states defines the selection of the concrete channel of the compound channel CC. In addition the transmission of a selected message or a coat thereof through the compound channel CC is characterized by the channels transmission function $W_t$ which is formed by a stochastic matrix.

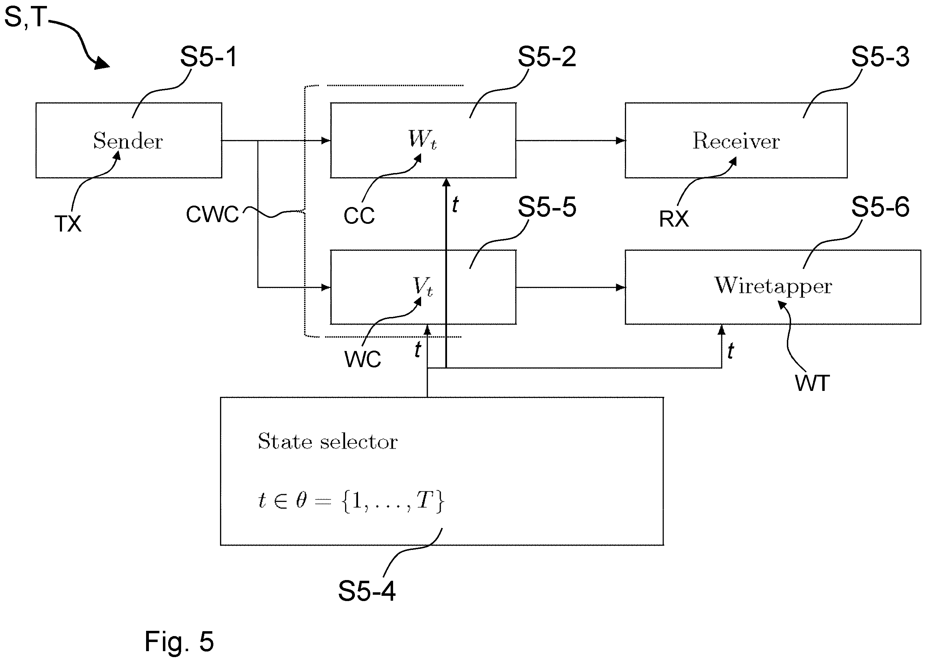

Figure 5 is a block diagram showing a schematic representation of a compound wiretap channel WC in the sense of the present invention.

The configuration shown in figure 5 corresponds to the configuration shown in figure 4, i.e. sections S5-1, S5-2, S5-3, and S5-4 of figure 5 directly correspond to respective sections S4-1, S4-2, S4-3, and S4-4 of the configuration shown in figure 4.

In addition, the configuration of figure 5 for the compound wiretap channel CWC comprises as a non-dedicated or non-legitimate und thus desired receiving site a wiretapper WT in section S5-6 which is connected to the transmitting site TX situated in section S5-1 by means of a wiretap channel WC in section S5-5 and defined by transmission function $V_t$ in the form of a stochastic matrix and dependent on the state selector of section S5-4 and the respective states $t \in \theta = \{1, \dots, T\}$ selected.

## 1 General technical formulation

These and further aspects of the present invention will also be described in detail in the following, which inter alia additionally relate to general protocols for secure and robust identification via channels.

Thus, in the context of the present invention, secure and robust protocols for identification of messages over communication channels are considered.

Accordingly, in the general theory of identification underlying the present invention the goal of a receiver is changed compared to direct message transmissions. In the theory of message transmission, as it has been defined by Shannon, the goal of a receiver of section S2-3 was to decode the transmitted message as such from a transmitting site in section S2-1 and received via a channel in section S2-2 as shown in figure 2.

For this kind of communication, a receiver RX in section S2-3 must be capable of successfully decoding all the messages from a sender or transmitter TX in section S2-1.

In the theory of identification, however, a receiver RX has to decide, based on the information obtained via a channel situated in section S3-2, whether or not the message transmitted by a transmitter TX is equal to an arbitrarily selected message of the message set, as demonstrated in figure 3.

The receiver's answer should be correct with high probability.

Machine-to-machine and human-to-machine communications are centrally important to future communication systems. These new applications demand a strict adherence to end-to-end latency.

As can be shown, the secrecy for these applications and their necessary latency requirements must be embedded in the physical transmission. Furthermore, for many of the applications discussed, the message transmission problem is too limiting. The theory of identification is not as restrictive at the receiver side like the theory of communication. For this reason, significant performance improvements in communication systems by using implementation of identification codes instead of usual communication codes can be expected.

In particular, possible promising applications with improvements - among other - are

- communication solutions for industry 4.0,

- communication solutions for logistics applications,

- vehicle-to-vehicle communication,

- vehicle-to-infrastructure communication, and

- infrastructure-to-vehicle communication.

The future 5G communication system "tactile internet" will be developed for these and other applications. In all of these applications, at least one of the following situations occur: The transmitter TX measures physical and technical variables and sends corresponding data to a receiver (for example, a control center) for evaluation. A large part of the possible measured values is not critical for the system behavior as long as the corresponding measured values are in an uncritical range. In this case, the receiver RX does not have to be able to decode/process the values. The receiver is only interested if the values are in a critical range. He only wants to decode/process these critical values. The essential point is that the transmitter TX does not need to have any global knowledge about what values are important to the receiver RX (for example the control center). The importance of what values are actually important can change during the operation of the technical system. Such situations occur in the above-mentioned applications.

In the following sections regarding some background and its limitations, the difference between these two conceptual formulations will be considered.

Two different problems are consider, namely (1) robust identification as such and (2) robust and secure identification on the other hand:

(1) Robust identification

In the 1st problem, identification with channel uncertainty is considered. This is modeled by a given set of channels. The communication participants know this set, but they do not know which channel of this set describes the channel actual used. This can be caused, for example, by a time change or by an inaccurate estimate of the channel. This can also be considered as a channel with state selector. A state selector S4-4, S5-4 chooses a channel, but the transmitter TX and the receiver RX do not know his selection. Such a model is called a compound channel and may be denoted by CC.

To construct a *(n, N, λ)* identification code for the compound channel, a *(n, M, λ)* transmission code $C = \{(c_m, E_m) : m = 1,..., M\}$ is used for the compound channel CC which reaches the capacity. From the message set $M = \{1,$

$$N \geq \frac{1}{M} 2^{\lfloor \varepsilon M \rfloor}$$

$2, ... ,M\}$ of the transmission code one takes subsets $A_1,..., A_N \subset M$ each of cardinality $\lfloor \varepsilon M \rfloor$, such that the cardinalities of the pairwise intersections

$$|\mathcal{A}_i \cap \mathcal{A}_j| < \lambda \lfloor \varepsilon M \rfloor,$$

$\forall\ i, j = 1,...,N\ (i \neq j)$. An identification compound code $\{(P_i, D_i) : i = 1,..., N\}$ is constructed by taking as $P_i$ the uniform distribution on

$$\mathcal{C}_i \triangleq \{c_m : m \in \mathcal{A}_i\}$$

and as $D_i$ the union of the corresponding $E_m s$.

Figure 4 shows an example of a compound channel CC.

(2) Robust and secure identification

In the 2nd problem identification with channel uncertainty and security is considered. The 1st problem is extended by an eavesdropper or wiretapper WT. In practice, this means that the transmitter TX and the recipient or receiver RX do not want other - e.g. hostile - parties to be able to identify the message. It is called a wiretap channel and may be denoted by WC. It is defined by a common input alphabet and possibly different output alphabets, connecting a sender with two receivers, one legal receiver RX and one wiretapper WT. The legitimate receiver RX accesses the output of the 1st channel and the wiretapper WT observes the output of the 2nd channel. A code for the channel conveys information to the legal receiver RX such that the wiretapper WT knows nothing about the transmitted information. This again can be considered as a transmission with a state selector situated in section S5-4 in figure 5. As before, a state selector chooses a state *t*, but the transmitter TX and the receiver RX do not know his selection. Now the wiretapper WT gets the selected state *t*.

This corresponds to an active attack by the state selector and passive wiretapping. One may assume that the wiretapper WT also acts as a state selector. To construct a *(n, N, A)* identification code for the compound wiretap channel also denoted by CWC, one may use two fundamental codes, namely a *(n, M', A)* transmission code $C = \{(c_m, D_m) : m = 1,..., M\}$ for the compound channel CC with code size

$$M' = \lceil 2^{n(C(W)-\varepsilon)} \rceil$$

and a $(\sqrt{n}, M'', \lambda(\sqrt{n}))$ wiretap code for the wiretap channel WC with code size $M'' = \lceil 2^{\varepsilon\sqrt{n}} \rceil$. For the message set $M' = \{1,2,..., M'\}$ of the transmission code one may use a suitable indexed set of colorings of the messages with a relatively small number of colors (compared to the number of messages) which is known both to the sender and the receiver(s).

Each coloring corresponds to an identification message. The transmitter TX chooses one coloring, let's say $T_i$, and a message of the message set $M'$, let's say $m$ at random. Then he calculates the color of the message $m$ under $T_i$ and transmits both the message m with the 1st fundamental code and the color of the message $m$ under $T_i$ with the 2nd fundamental code. The receiver RX interested in identification message $i'$ calculates the color of the message $m$ under $T_{i'}$ and checks whether it is equal to the received color or not. In the 1st case, it is decided that the original identification message was $i'$, otherwise he says it was not $i'$. A wiretap code is used for the 2nd fundamental code with the strong secrecy criterion. It is thus not possible for the wiretapper WT to identify the message.

Figure 5 shows the compound wiretap channel CWC.

## 2 Background

For the above application fields, or generally for the applications mentioned with the tactile internet, already some parts have been standardized or are in the current development/standardization. One example is the 5G wireless communication system. All solutions are based on the communication approach of Shannon (see figure 2), which means that these implementations/standardizations do not even have the structure of the identification task.

This results in an inefficient use of the resources of the communication system (see Section 3, subsection 1). This will also be shown by the representations of the following known scientific results for identification.

The communication task of identification was introduced in by R. Ahlswede and G. Dueck. The compound channel model was introduced by Blackwell, Breiman, and Thomasian. The degraded form of the wiretap channel was introduced by Wyner. The non-degraded model can be solved.

According to the present invention, two methods for coding strategies are used.

Information theoretic models and their achievable rates are considered. Our second model concerned with security. One may use for the envisaged strategy codes with strong secrecy. The definitions of our two models are as follows.

1. Firstly, the compound channel CC is considered. This model models both lack of knowledge of the channel and possible attacks by an attacker. The lack of knowledge of the channel occurs when the channels can only be estimated in real communication systems. Pilot signals are used for this purpose.

Definition 1: A discrete memoryless compound channel CC is a triple $(X, Y, W)$, where $X$ is the finite input alphabet, $Y$ is the finite output alphabet, $\theta$ is a finite state set, and $W = \{W_t\}t \in \theta$, such that for $t \in \theta$

$$W_t = \{W_t(y|x) : x \in \mathcal{X}, y \in \mathcal{Y}\} \tag{1}$$

is a stochastic matrix. The probability for a sequence $y^n \in y^n$ to be received if $x^n E X^n$ was sent and $t \in \theta$ is the state defined by

$$W_t^n(y^n|x^n) = \prod_{j=1}^{n} W_t(y_j|x_j)$$
.

If it is clear which alphabets are to be used, one may omit them if one is talking about the channel. If $P$ is a probability distribution on $x$ and $W = \{W(y|x) : x \in X, y \in Y\}$, a stochastic matrix, one may set for the mutual information $I$, also called the transinformation $I$, $I(P; W) := I(X \wedge Y)$ where X is a random variable (or RV) with distribution $P$ and $Y$ has conditional distribution $W(\cdot|x)$, given $X = x$.

The compound Channel CC works as follows: Before the sender TX transmits $x^n$ over the channel, $t \in \theta$ is

chosen by the state selector and $W_t$ is used during the transmission. A compound channel CC with $|\theta| = 1$ is called a discrete memoryless channel, abbreviated by DMC.

In the following, a suitable code-concept for transmitting messages over a given compound channel CC is defined.

Definition 2: A randomized (n, M, $\lambda$)-transmission code for a compound channel CC with $(W_t)_{t\in\theta}$ is a family of pairs $\{(Q_i, \mathcal{D}_i) | i = 1,\ldots, M\}$ such that $\forall\, i = 1, \ldots, M$ and $\forall\, i \neq j$ the following relations

$$Q_i \in \mathcal{P}\left(\mathcal{X}^n\right), \mathcal{D}_i \subset \mathcal{Y}^n \qquad (2)$$

$$\mathcal{D}_i \cap \mathcal{D}_j = \emptyset \qquad (3)$$

$$\min_{t\in\theta} \sum_{x^n \in \mathcal{X}^n} Q_i\left(x^n\right) W_t^n\left(\mathcal{D}_i | x^n\right) \geq 1 - \lambda \qquad (4)$$

are fulfilled.

The definition $M^{CC}$(n, M, $\lambda$) := max{$M$ : A (n, M, $\lambda$) CC code exists} is adopted.

Definition 3: Let $W$ be a compound channel CC.

(a) The rate $R$ of an *(n, M, $\lambda$)* code is defined as $R = log(M)/n$ bits.
(b) A rate $R$ is said to be achievable if for all $\lambda \in (0, 1)$ there exists a $n_0(\lambda)$, such that for all $n \geq n_0(\lambda)$ there exists a (n, $2^{nR}$, $\lambda$) code.
(c) The transmission capacity $C(W)$ of a compound channel $W$ is the supremum of all achievable rates.

The following theorem holds.

Theorem 1: The capacity of the compound channel $W$ is

$$C(\mathcal{W}) = \max_P \min_{W\in\mathcal{W}} I(P; W) \qquad (5)$$

2. Secondly, the wiretap channel WC is considered in the following.

Definition 4: A discrete memoryless wiretap channel (WC) is a quintuple (*X, Y, Z, W, V*) wherein *X* is the finite input alphabet, *Y* is the finite output alphabet for the legitimate receiver RX, *Z* is the finite output alphabet for the wiretapper WT, $W = \{W(y|x) : x \in X, y \in Y\}$ is the channel transmission matrix, whose output is available to the legitimate receiver RX, and $V = \{V(z|x) : x \in X, z \in Z\}$ is the channel transmission matrix, whose output is available to the wiretapper WT. The channels are assumed to be memoryless, thus, $W^n(y^n | x^n) = \prod_{t=1}^n W(y_t | x_t)$ and $V^n(z^n | x^n) = \prod_{t=1}^n V(z_t | x_t)$.

Definition 5: A *(n, M, $\lambda$)* secrecy code for the wiretap channel (*X, Y, Z, W, V*) is defined as a system $\{(Q_i, D_i) : 1 \leq 1 \leq M\}$ where for all i: $Q_i \in \mathcal{P}(X^n)$ and $\mathcal{D}_i \subset Y^n$. It is required

$$D_i \cap \mathcal{D}_j = \emptyset \text{ for all } i \neq j \qquad (6)$$

$$\sum_{x^n \in \mathcal{X}^n} Q_i(x^n) W^n(\mathcal{D}_i | x^n) \geq \mathbb{1} - \lambda \qquad (7)$$

$$I(U, Z^n) \le \lambda,$$
$$(8)$$

where $U$ is a uniformly distributed random variable taking values in $\{1, \ldots, M\}$ and $Z^n$ is the resulting random variable at the output of the channel $V$ of the wiretapper WT.

The (message transmission) secrecy capacity $Cs(W, V)$ of the wiretap channel WC is defined as the maximum rate of any code which satisfies these conditions. Formally, let

$$M^S(n, \lambda) = \max\{M : \exists \text{ an } (n, M, \lambda) \text{ WC-code}\},$$

then the secrecy capacity Cs of the wiretap channel is defined as $C_s(W, V) = \sup\{R_s : \forall \ \varepsilon > 0, \exists n(\varepsilon) \text{ such that for } n \ge n(\varepsilon) \ M_s(n, \varepsilon) \ge 2^{nR_s}\}$.

The following property holds:

Theorem 2:

$$C_S(W, V) = \max_{U \to X \to YZ} I(U \wedge Y) - I(U \wedge Z),$$

wherein $Y$ is the resulting random variable at the output of legal receiver channel and $Z$ is the resulting random variable at the output of wiretap channel WC. The maximum is taken over all random variables that satisfy the Markov chain relationship $U \to X \to YZ$.

3. Thirdly, identification codes are considered in the following.

Definition 6: A randomized $(n, M, \lambda_1, \lambda_2)_i$ identification code for the DMC is a family of pairs

$$\{(Q_i, \mathcal{D}_i) | i = 1, \ldots, M\},$$

with

$$Q_i \in \mathcal{P}(\mathcal{X}^n), \quad \mathcal{D}_i \subset \mathcal{Y}^n, \quad \forall \ i = 1, \ldots, M$$

and with errors of the 1st and the 2nd kind, respectively, bounded by

$$\sum_{x \in \mathcal{X}^n} Q_i(x^n) W^n(\mathcal{D}_i | x^n) \ge 1 - \lambda_1, \ \forall \ i = 1, \ldots, N$$
$$(9)$$

and

$$\sum_{x \in \mathcal{X}^n} Q_j(x^n) W^n(\mathcal{D}_i | x^n) \le \lambda_2, \ \forall \ i, j = 1, \ldots, M, \quad i \ne j$$
$$(10)$$

The receiver RX which is interested in message $i$ will decide that his message was transmitted if and only if the received channel output is in $D_j$, otherwise the receiver RX will deny that message $i$ was sent.

Those two error probabilities turn out to be of different nature: Errors of the 1st kind are produced by channel noise, while on the other hand errors of the 2nd kind are mainly created by the identification code scheme.

Let $M^{ID}(n, N, \lambda) := \max\{N \in \mathbb{N} : A \ (n, N, \lambda_1, \lambda_2) \text{ ID code exists with} \lambda_1, \lambda_2 \le \lambda\}.$

<u>Definition 7</u>: Let (*X, Y, W*) be a DMC.

(a) The rate *R* of an (n, N, $\lambda_1$, $\lambda_2$) identification code is defined as $R = \frac{\log\log N}{n}$ bits.

(b) The identification rate *R* of a DMC is said to be achievable if for all $\lambda \in$ *(0, 1)* there exists a $n_0(\lambda)$, such that for all $n \geq n_0(\lambda)$ there exists a (*n*, $2^{2_{nR}}$, $\lambda$, $\lambda$) identification code.

(c) The identification capacity $C_{ID}$(W) of a DMC *W* is the supremum of all achievable rates.

<u>Theorem 3</u>:

$$\lim_{n\to\infty} \frac{\log\log M^{ID}(n,\lambda)}{n} = C_{ID}(W) = C(W), \ \forall \ \lambda \in (0, 1/2) \tag{11}$$

were *C(W)* denotes the Shannon capacity of the channel.

4. Fourthly, identification over a wiretap channel WC is considered.

<u>Definition 8</u>: A randomized (n, N, $\lambda$) wiretap channel identification code for the wiretap channel WC is a system

$$\left\{(Q_i, \mathcal{D}_i) : 1 \leq i \leq N\right\}$$

where, for all *i, $Q_i \in \mathcal{P}(X^n)$* and $\mathcal{D}_i \subset Y^n$, which satisfies the following three conditions:

(a) for all *i*:

$$\sum_{x^n \in \mathcal{X}^n} Q_i(x^n)W^n(\mathcal{D}_i|x^n) \geq 1 - \lambda ,$$

(b) for all pairs *(i, j)* with $i \neq j$:

$$\sum_{x^n \in \mathcal{X}^n} Q_j(x^n)W^n(\mathcal{D}_i|x^n) \leq \lambda ,$$

(c) for any pair *(i, j)* with $i \neq j$ and any $V \subset Z^n$

$$\sum_{x^n \in \mathcal{X}^n} Q_j(x^n)V^n(\mathcal{V}|x^n) + \sum_{x^n \in \mathcal{X}^n} Q_i(x^n)V^n(\mathcal{V}^c|x^n) \geq 1 - \lambda .$$

<u>Definition 9</u>: The maximum *M* for which a randomized (n, M, $\lambda$) wiretap channel identification code exists is denoted by $M^{SID}(n, \lambda)$. Define the secure identification capacity $C_{SID}$ of the wiretap channel WC by letting

$$C_{SID} = \max\left\{R : \forall \lambda > 0, \exists n(\lambda) \ such \ that \ for \ n \geq n(\lambda) \ M^{SID}(n,\lambda) \geq 2^{2^{nR}}\right\}.$$

A remarkable result on this problem follows.

<u>Theorem 4</u>: Let *C(W)* be the Shannon capacity of the channel *W* and let *Cs(W, V)* be the secrecy capacity of the wiretap channel WC, then

$$C_{SID}(W, V) = C(W), \quad if \ C_S(W, V) > 0,$$

and

$$C_{SID}(W,V) = 0, \quad if \ \ C_S(W,V) = 0.$$

### 3 Limitations

Two areas are considered: On the one hand the implementations and on the other hand the scientific results.

1. As already described in Section 2 above, all known implementations for solving the problem of identification are based on Shannon's transmission theory. By this limitation, much less messages/events can be identified quantitatively. More specifically, using the protocols based on Shannon's theory, $2^{nC}$ messages/events can be transmitted, where $C$ is the capacity of the channel. So based on Shannon's approach only $2^{nC}$ messages/events can be identified. Using the protocols based on identification theory, $2^{2^{nC}}$ messages/events can be identified. Therefore, for problems in which messages/events have to be identified, such as those described in section 1, one should use protocols from the identification theory. This direct implementation has resulted in an extreme increase in efficiency, is the sense of an exponential increase.

2. The 1st identification protocols were developed by Ahlswede and Dueck in 1989. The 1st identification protocol with safety aspect was developed by Ahlswede and Zhang in 1995. All known protocols for identifications can only be used for non-robust channels. Therefore the channel have to be known exactly. Practically, this is not possible.

Furthermore, the protocol for identification with an eavesdropper uses a wiretap code with a weak secrecy condition. Whereas the strong secrecy condition requires the total information transfer to the eavesdropper to tend to zero, the weak secrecy condition requires the persymbol information transfer to go to zero. Obviously, the strong secrecy condition guaranteed more security. Therefore, it is more suitable to use the strong secrecy condition, when one can reach the same capacity as with the weaker one.

### 4 Further aspects of the present invention

The present invention inter alia considers robust identification codes and secure robust identification codes.

1. Firstly, a robust identification code is defined.

Definition 10: A randomized $(n, N, \lambda_1, \lambda_2)$ compound channel identification code with states t in a set $\theta = \{1, ..., T\}$ is a family of pairs $\{(Q_i, \mathcal{D}_i)|i = 1,..., N\}$ such that $\forall\, i, j = 1,..., N, i \neq j$

$$Q_i \in \mathcal{P}\left(\mathcal{X}^n\right), \quad \mathcal{D}_i \subset \mathcal{Y}^n$$

and with errors of the 1st and the 2nd kind, respectively, bounded by

$$\min_{t \in \theta} \sum_{x \in \mathcal{X}^n} Q_i\left(x^n\right) W_t^n\left(\mathcal{D}_i | x^n\right) \geq 1 - \lambda_1 \quad , \qquad\qquad (12)$$

and

$$\max_{t \in \theta} \sum_{x \in \mathcal{X}^n} Q_j\left(x^n\right) W_t^n\left(\mathcal{D}_i | x^n\right) \leq \lambda_2. \qquad\qquad (13)$$

Definition 11: Let $(X, Y, W)$ be a compound channel CC.

(a) The transmission rate R of an $(n, N, \lambda_1\, \lambda_2)$ compound channel identification code is R = log(log(N)) / n bits.

(b) The identification rate $R$ of a compound channel CC is said to be achievable if for all $\lambda \in (0, 1)$ there exists a $n_0(\lambda)$, such that for all $n \geq n_0(\lambda)$ there exists a $(n, 2^{2^{nR}}, \lambda, \lambda)$ compound channel identification code.

(c) The identification capacity $C_{ID}(W)$ of a compound channel $W$ is the supremum of all achievable rates.

It can be shown that the errors of the 1st and of the 2nd kind for the construction described in section 1.1 are small. Furthermore, it can be shown that the rate of the protocol is best possible.

The core of the proof is a result achieved on hypergraphs.

A hypergraph is a pair $\Gamma = (V, \varepsilon)$ with a finite set $V$ of vertices and a finite set $\varepsilon$ of (hyperedges $E \subset V$. $\Gamma$ may be called e-uniform, if all its edges $E$ have cardinality e. An edge $E \subset \varepsilon$ denotes the characteristic function of $E \subset V$ by $^1E$.

The identification capacity $C_{ID}$ of a robust channel model, i.e. of the compound channel CC, is determined.

<u>Theorem 5:</u> For the compound channel CC the relation

$$C_{ID}(\mathcal{W}) = C(\mathcal{W}) = \max_{P} \min_{W \in \mathcal{W}} I(P; W) \tag{14}$$

holds.

2. Secondly, a secure robust identification code is defined.

<u>Definition 12:</u> Let $\theta = \{1, - - - , T\}$ be a finite index set. A discrete memoryless compound wiretap channel , denoted by CWC, is a quintuple $(X, Y, Z, W, V)$ wherein $X$ is the finite input alphabet, $Y$ is the finite output alphabet for the legitimate receiver RX, $Z$ is the finite output alphabet for the wiretapper WT, $W = (W_t)_{t \in \theta}$ with $W_t = \{W_t(y|x) : x \in X, y \in Y\}$ is the set of the transmission matrices whose output is available to the legitimate receiver RX, and $V = (V_t)_{t \in \theta}$ with $V_t = \{V_t(y|x) : x \in X, y \in Y\}$ is the set of transmission matrices whose output is available to the wiretapper WT. The channel is assumed to be memoryless.

The problem of identification via this channel in the sense of Ahlswede and Dueck can be formulated as follows:

<u>Definition 13:</u> Let $\theta = \{1,..., T\}$, $W = (W_t)_{t \in \theta}$, $V = (V_t)_{t \in \theta}$, and $(W, V)$ be a compound wiretap channel CWC. A randomized $(n, N, \lambda_1, \lambda_2)^{CWC}_{IDs}$ identification code of a compound wiretap channel CWC is a family of pairs $\{(Q_i, D_i) | i = 1,...., N\}$ with

$$Q_i \in \mathcal{P}\left(\mathcal{X}^n\right), \quad \mathcal{D}_i \subset \mathcal{Y}^n, \ \forall \, i = 1, \ldots, N,$$

such that $\forall \, i,j = 1,...,N \ i \neq j$ the following relations are fulfilled

$$\min_{t \in \theta} \sum_{x \in \mathcal{X}^n} Q_i\left(x^n\right) W_t^n\left(\mathcal{D}_i | x^n\right) \geq 1 - \lambda_1 \tag{15}$$

$$\max_{t \in \theta} \sum_{x \in \mathcal{X}^n} Q_j\left(x^n\right) W_t^n\left(\mathcal{D}_i | x^n\right) \leq \lambda_2 \tag{16}$$

$$\min_{t \in \theta} \sum_{x^n \in \mathcal{X}^n} Q_j(x^n) V_t^n(\mathcal{V} | x^n) \\ + \sum_{x^n \in \mathcal{X}^n} Q_i(x^n) V_t^n(\mathcal{V}^c | x^n) \geq 1 - \lambda \tag{17}$$

for any pair (I, j) with i # j and any $V \subset Z^n$.

<u>Definition 14:</u> The maximum $M$ for which a randomized (n, M, $\lambda$) compound wiretap channel identification code exists is denoted by $M^{SID}(n, \lambda)$. Define the secure identification capacity $C_{SID}$ of the compound wiretap channel CWC by $C_{SID}(W, V) = \max\{R : \forall \, \lambda > 0, \exists n(\lambda) \text{ such that for } n \geq n(\lambda) \, M^{SID}(n, \lambda) \geq 2^{2_n^{(R-\lambda)}}\}$.

The identification capacity of the compound wiretap channel CWC can be given and a secure and robust identification code can be constructed.

<u>Theorem 6:</u> (Dichotomy Theorem) Let $C_S(W)$ be the capacity of a compound channel $W$ and let $C_s^{CWC}(\mathcal{W}, \mathcal{V})$ be the secrecy capacity of the compound wiretap channel CWC ($W$, $V$), then

$$C_{SID}(\mathcal{W}, \mathcal{V}) = C(\mathcal{W}), \quad if \ C_S(\mathcal{W}, \mathcal{V}) > 0$$

and

$$C_{SID}(\mathcal{W}, \mathcal{V}) = 0, \quad if \ C_S(\mathcal{W}, \mathcal{V}) = 0$$

are fulfilled.

The identification code is constructed by two codes.

Let $0 < \varepsilon < C$, be fixed. There is a $\delta > 0$ such that for sufficiently large n there is an (n, M', $\lambda$(n)) compound channel code

$$C' = \left\{ \left( u'_j, D'_j | j = 1, \cdots, M' \right) \right\} \tag{18}$$

and an ( $\lceil \sqrt{n} \rceil, M'', \lambda(\sqrt{n})$ ) compound wiretap channel or CWC code

$$C'' = \{ (u''_k, D'_k | k = 1, \cdots, M'') \} \tag{19}$$

with code sizes $M' = \lceil 2^{n(C(\mathcal{W})-\varepsilon)} \rceil$ and $M'' = \lceil 2^{\varepsilon \sqrt{n}} \rceil$.

It can be shown that the identification capacity $C_{ID}(W)$ is positive if the capacity of the wiretap channel WC is positive.

It is clear that the secure identification capacity cannot exceed the identification capacity of the channel. It is enough to show that the secure identification capacity is zero if the message transmission secrecy capacity is zero. Therefore it is shown that $C_{SID}(W, V) > 0$, then $G_S(W, V) > 0$.

## 5 Benefits of the proposed invention

With the present invention, the 1st protocol for identification of a message over a robust Channel is developed. This has the advantage that exact channel knowledge is not needed any more. Furthermore, another protocol can be given which is protected against an eavesdropper. It is shown that only a small secrecy capacity of the wiretap channel WC is necessary in order to use the full identification capacity of the channel and to keep the wiretapper WT uninformed. By using the theory of identification instead of Shannon's transfer theory, an exponential efficiency increase is achieved, as discussed in more detail in section 1. This can be considered as a model with a state selector. The selector chooses a state t, but the sender TX and the receiver RX do not know his selection. The wiretapper WT gets the state t. This corresponds to an active attack by the state selector and passive wiretapping. It may be assumed that the wiretapper WT also acts as a state selector. For the construction of the code a code with strong secrecy criterion can be used.

**List of reference signs**

CC      compound channel
CWC    compound wiretap channel

$I_s$    mutual information, trans-information

r(t)    sent signal, after physical channel T4 and before demodulator T5

RX    receiver, receiving site
s    signal to be sent, after modulator T3 and before physical channel T4

S    transmission/reception method
t    state variable
T    transmission/reception system

T1    information source unit
T2    encoding unit
T3    modulator unit
T4    (physical) transmission/reception (waveform) channel unit
T5    demodulator unit
T6    decoder unit
T7    information sink unit

TX    transmitter, transmitting site, sender

U    signal from source T1, before encoder T2
V    signal to sink T7, after decoder T6
WC    wiretap channel
WT    wiretapper
X    signal, after encoder T2 and before modulator T3
Y    signal, after demodulator T5 and before decoder T6

**Claims**

1.  Method (S) of transmitting messages in an environment of transmitters (TX) and receivers (RX) for a transmitter (TX) involving a process of identification, comprising:

    - selecting a message to be sent from a fixed set of messages,
    - generating a *(n, N, λ)* identification code based on a compound code by using a stochastic encoder in order to randomly select a code from the compound code for the message to be sent, wherein the stochastic encoder is used in order to generate the identification code from the compound code, wherein n is a blocklength of a codeword, N is a number of identification messages and $\lambda \in (0, 1)$,
    - sending (TX) the identification code over a channel, wherein the channel is modelled as a given compound channel (CC) which is formed as a set of channels and is ruled by a state variable t, wherein the state t is not known to the transmitter (TX);

    wherein two fundamental codes are used to construct the *(n, N, λ)* identification code for the compound channel, namely a *(n, M', λ)* transmission code $C = \{(c_m, D_m) : m = 1,..., M\}$ for the compound channel (CC) with code size $M' = \lceil 2^{n(C(\mathcal{W})-\varepsilon)} \rceil$ and a $(\sqrt{n}, M'', \lambda(\sqrt{n}))$ wiretap code for a wiretap channel (WC) with code size $M'' = \lceil 2^{\varepsilon\sqrt{n}} \rceil$, wherein the wiretap channel (WC) is a channel in between the transmitter (TX) and a wiretapper, wherein the wiretap channel is modelled as a compound channel and a state variable t is known to the wiretapper,
    wherein a suitable indexed set of colorings of the messages with a relatively small number of colors *M''* compared to the number of messages which is known both to the sender and the receiver is used for the message set *M'* = {1, 2, ... , *M'*} of the transmission code,
    wherein each coloring corresponds to an identification message and the transmitter (TX) chooses one coloring $T_i$ and a message m of the message set *M'*, calculates the color of the message *m* under the one

coloring $T_i$ and transmits the message m with the transmission code and the color of the message $m$ under the one coloring $T_i$ with the wiretap code,

wherein $\theta = \{1, \ldots , T\}$ is a finite index set and a discrete memoryless compound wiretap channel , denoted by CWC, is a quintuple $(X, Y, Z, W, V)$, wherein $X$ is the finite input alphabet, $y$ is the finite output alphabet for the legitimate receiver (RX), $Z$ is the finite output alphabet for the wiretapper (WT), $W = (W_t)_{t \in \theta}$ with $W_t = \{W_t(y|x) : x \in X, y \in Y\}$ is the set of the transmission matrices whose output is available to the legitimate receiver (RX), and $V = (V_t)_{t \in \theta}$ with $V_t = \{V_t(y|x) : x \in X, y \in Y\}$ is the set of transmission matrices whose output is available to the wiretapper (WT),

wherein $(W, V)$ describes the CWC and a randomized $(n, N, \lambda_1, \lambda_2)_{IDs}^{CWC}$ identification code of the CWC is a family of pairs $\{(Q_i, D_i) | i = 1, \ldots , N\}$ with $Q_i \in \mathcal{P}(X^n)$, $\mathcal{D}_i \subset Y^n$, $\forall\, i = 1, \ldots ,N$, such that $\forall\, i,j = 1,\ldots,N,\ i \neq j$ the following relations are fulfilled

$$\min_{t \in \theta} \sum_{x \in \mathcal{X}^n} Q_i\left(x^n\right) W_t^n\left(\mathcal{D}_i | x^n\right) \geq 1 - \lambda_1$$

$$\max_{t \in \theta} \sum_{x \in \mathcal{X}^n} Q_j\left(x^n\right) W_t^n\left(\mathcal{D}_i | x^n\right) \leq \lambda_2$$

$$\min_{t \in \theta} \sum_{x^n \in \mathcal{X}^n} Q_j(x^n) V_t^n(\mathcal{V}|x^n) + \sum_{x^n \in \mathcal{X}^n} Q_i(x^n) V_t^n(\mathcal{V}^c|x^n) \geq 1 - \lambda$$

for any pair (i, j) with i ≠ j and any $V \subset Z^n$, wherein $W_t$ ($D_j|x^n$) is the channel transmission matrix of the compound channel at state t defining the probability that $D_i$ is received if $x^n$ was transmitted,

wherein $\lambda_1$ is an error probability of a error of the 1st kind and $\lambda_2$ is an error probability of a error of the 2nd kind, wherein errors of the 1st kind are produced by channel noise and errors of the 2nd kind are created by the identification code scheme.

**Patentansprüche**

1. Verfahren (S) zur Übertragung von Nachrichten in einer Umgebung von Sendern (TX) und Empfängern (RX) für einen Sender (TX), das einen Identifizierungsprozess aufweist, umfassend:

- Auswählen einer zu versendenden Nachricht von einem bestimmten Satz von Nachrichten,
- Erzeugen eines *(n, N, λ)* Identifikationscodes basierend auf einem zusammengesetzten Code unter Verwendung eines stochastischen Codierers, um einen Code von dem zusammengesetzten Code für die zu sendende Nachricht zufällig auszuwählen, wobei der stochastische Codierer verwendet wird, um den Identifikationscode von dem zusammengesetzten Code zu erzeugen, wobei n eine Blocklänge eines Codeworts ist, N eine Anzahl von Identifikationsnachrichten ist und *λ ∈ (0, 1)*,
- Senden (TX) des Identifikationscodes über einen Kanal, wobei der Kanal als ein gegebener zusammengesetzter Kanal (CC) modelliert wird, der als ein Satz von Kanälen gebildet wird und durch eine Zustandsvariable t bestimmt wird, wobei der Zustand t dem Sender (TX) nicht bekannt ist;

wobei zwei grundlegende Codes verwendet werden, um den *(n, N, λ )*-Identifikationscode für den zusammengesetzten Kanal zu konstruieren, nämlich ein *(n, M', λ )*-Sendecode $C = \{(c_m, D_m) : m = 1,..., M\}$ für den zusammengesetzten Kanal (CC) mit der Codegröße

$$M' = \left\lceil 2^{n(C(\mathcal{W}) - \varepsilon)} \right\rceil$$

und ein $\left(\sqrt{n}, M'', \lambda(\sqrt{n})\right)$ -Abhörcode für einen Abhörkanal (WC) mit der Codegröße

$M'' = \lceil 2^{\varepsilon \sqrt{n}} \rceil$, wobei der Abhörkanal (WC) ein Kanal zwischen dem Sender (TX) und einem Abhörgerät ist, wobei der Abhörkanal als ein zusammengesetzter Kanal modelliert ist und eine Zustandsvariable t dem Abhörgerät bekannt ist,

wobei für den Nachrichtensatz $M' = \{1, 2, .. .,M\}$ des Übertragungscodes ein geeigneter indizierter Satz von Einfärbungen der Nachrichten mit einer relativ kleinen Anzahl von Farben $M''$ im Vergleich zur Anzahl von Nachrichten verwendet wird, die sowohl dem Sender als auch dem Empfänger bekannt ist,

wobei jede Einfärbung einer Identifikationsnachricht entspricht und der Sender (TX) eine Färbung $T_i$ und eine Nachricht m von dem Nachrichtensatz $M'$ auswählt, die Farbe der Nachricht $m$ unter der einen Einfärbung $T_i$ berechnet und die Nachricht m mit dem Sendecode und die Farbe der Nachricht $m$ unter der einen Einfärbung $T_i$ mit dem Abhörcode überträgt,

wobei $\theta = \{1, ... , T\}$ ein endlicher Indexsatz ist und ein diskreter speicherloser zusammengesetzter Abhörkanal , bezeichnet mit CWC, ein Fünffach $(X, Y Z, W, V)$ ist, wobei $X$ das endliche Eingabealphabet ist, $Y$ das endliche Ausgabealphabet für den rechtmäßigen Empfänger (RX) ist, $Z$ das endliche Ausgabealphabet für den Abhörgerät (WT) ist, $W = (W_t)_{t \in \theta}$ mit $W_t = \{W_t(y|x) : x \in X, y \in y\}$ der Satz von Übertragungsmatrizen ist, deren Ausgabe dem rechtmäßigen Empfänger (RX) zur Verfügung steht, und $V = (V_t)_{t \in \theta}$ mit $V_t = \{V_t(y|x) : x \in X, y \in Y\}$ der Satz von Übertragungsmatrizen ist, deren Ausgabe dem Abhörgerät (WT) zur Verfügung steht,

wobei $(W, V)$ das CWC beschreibt und ein randomisierter $(n, N, \lambda_1, \lambda_2)_{IDs}^{CWC}$ Identifikationscode des CWC eine Familie von Paaren $\{(Q_i, D_i) |i = 1,..., N\}$ mit $Q_i \in \mathcal{P}(X^n)$, $\mathcal{D}_i \subset Y^n$, $\forall i = 1,..., N$ ist, sodass $V i, j = 1, . . . , N, i \neq j$ die folgenden Beziehungen erfüllt sind

$$\min_{t \in \theta} \sum_{x \in \mathcal{X}^n} Q_i(x^n) W_t^n(\mathcal{D}_i|x^n) \geq 1 - \lambda_1$$

$$\max_{t \in \theta} \sum_{x \in \mathcal{X}^n} Q_j(x^n) W_t^n(\mathcal{D}_i|x^n) \leq \lambda_2$$

$$\min_{t \in \theta} \sum_{x^n \in \mathcal{X}^n} Q_j(x^n) V_t^n(\mathcal{V}|x^n)$$
$$+ \sum_{x^n \in \mathcal{X}^n} Q_i(x^n) V_t^n(\mathcal{V}^c|x^n) \geq 1 - \lambda$$

für jedes Paar (i, j) mit i ≠ j und jedes $V \subset Z^n$, wobei $W_t(D_j|x^n)$ die Kanalübertragungsmatrix des zusammengesetzten Kanals im Zustand t ist, die die Wahrscheinlichkeit definiert, dass $D_i$ empfangen wird, wenn $x^n$ übertragen wird,

wobei $\lambda_1$ eine Fehlerwahrscheinlichkeit eines Fehlers der 1. Art ist und $\lambda_2$ eine Fehlerwahrscheinlichkeit der 2. Art ist, wobei Fehler der 1. Art durch Kanalrauschen erzeugt werden und Fehler der 2. Art durch das Identifikationscodeschema erzeugt werden.

## Revendications

1. Procédé (S) de transmission de messages dans un environnement d'émetteurs (TX) et de récepteurs (RX) pour un émetteur (TX) impliquant un processus d'identification, comprenant :

   - la sélection d'un message à envoyer à partir d'un ensemble fixe de messages,
   - la génération d'un code d'identification $(n, N, \lambda)$ sur la base d'un code composé en utilisant un codeur stochastique afin de sélectionner de manière aléatoire un code à partir du code composé pour le message à envoyer, où le codeur stochastique est utilisé afin de générer le code d'identification à partir du code composé, dans lequel n est une longueur de bloc d'un mot de code, N est un nombre de messages d'identification et $\lambda \in (0, 1)$,

- l'envoi (TX) du code d'identification sur un canal, où le canal est modélisé comme un canal composé (CC) donné qui est formé comme un ensemble de canaux et est régi par une variable d'état t, où l'état t n'est pas connu de l'émetteur (TX) ;

dans lequel deux codes fondamentaux sont utilisés pour construire le code d'identification $(n, N, \lambda)$ pour le canal composé, à savoir un code de transmission $(n, M', \lambda)$ $C = \{(c_m, D_m): m = 1, ...,M\}$ pour le canal composé (CC) avec une taille de code $M' = \left\lfloor 2^{n(C(W)-\varepsilon)} \right\rfloor$ et un code d'écoute $\left(\sqrt{n}, M'', \lambda(\sqrt{n})\right)$ pour un canal d'écoute (WC) avec une taille de code $M'' = \left\lceil 2^{\varepsilon\sqrt{n}} \right\rceil$, dans lequel le canal d'écoute (WC) est un canal entre l'émetteur (TX) et un dispositif d'écoute, dans lequel le canal d'écoute est modélisé comme un canal composé et une variable d'état t est connue du dispositif d'écoute,

dans lequel un ensemble indexé approprié de colorations des messages avec un nombre de couleurs M" relativement petit par rapport au nombre de messages qui est connu à la fois de l'expéditeur et du destinataire est utilisé pour l'ensemble de messages $M' = \{1,2,...,M\}$ du code de transmission,

dans lequel chaque coloration correspond à un message d'identification et l'émetteur (TX) choisit une coloration $T_i$ et un message $m$ de l'ensemble de messages $M'$, calcule la couleur du message $m$ sous la coloration $T_i$, et transmet le message $m$ avec le code de transmission et la couleur du message $m$ sous la coloration $T_i$ avec le code d'écoute,

dans lequel $\theta = \{1,...,T\}$ est un ensemble d'index finis et un canal d'écoute composé sans mémoire discret, désigné par CWC, est un quintuple $(X, Y, Z, W, V)$, dans lequel $X$ est l'alphabet d'entrée fini, $Y$ est l'alphabet de sortie fini pour le récepteur légitime (RX), $Z$ est l'alphabet de sortie fini pour le dispositif d'écoute (WT), $W = (W_t)_{t\in\theta}$ avec $W_t = \{W_t(y|x) : x \in X \ X, y \in Y\}$ est l'ensemble de matrices de transmission dont la sortie est disponible pour le récepteur légitime (RX), et $V = (V_t)_{t\in\theta}$ avec $V_t = \{V_t(y|x) : x \in X, y \in Y\}$ est l'ensemble de matrices de transmission dont la sortie est disponible pour le dispositif d'écoute (WT),

où $(W,V)$ décrit le CWC et un code d'identification $(n, N, \lambda_1, \lambda_2)_{IDs}^{CWC}$ aléatoire du CWC est une famille de paires $\{(Q_i, D_i)|i=1,...N\}$ avec $Q_i \in P(X^n)$, $D_i \subset Y^n$, $\forall i = 1,...,N$, $i \neq j$, de sorte que les relations suivantes soient satisfaites

$$\min_{t\in\theta} \sum_{x\in X^n} Q_i(x^n)W_t^n(D_i|x^n) \geq 1 - \lambda_1$$

$$\max_{t\in\theta} \sum_{x\in X^n} Q_j(x^n)W_t^n(D_i|x^n) \leq \lambda_2$$

$$\min_{t\in\theta} \sum_{x^n\in X^n} Q_j(x^n)V_t^n(V|x^n) + \sum_{x^n\in X^n} Q_i(x^n)V_t^n(V^c|x^n) \geq 1 - \lambda$$

pour toute paire (i, j) avec $i \neq j$ et tout $V \subset Z^n$, où $W_t(D_j|x^n)$ est la matrice de transmission de canal du canal composé à l'état t définissant la probabilité que $D_i$ soit reçu si $x^n$ a été transmis,

où $\lambda_1$ est une probabilité d'erreur d'une erreur du 1er type et $\lambda_2$ est une probabilité d'erreur d'une erreur du 2ème type, où les erreurs du 1er type sont produites par le bruit de canal et les erreurs du 2ème type sont créées par le schéma de code d'identification.

Fig. 1

EP 3 937 117 B1

Fig. 2

Sender chooses and sends

$m \in \mathcal{N} = \{1, 2, \ldots, N = 2^{2^{nC}}\}$

TX

S3-1

channel

S3-2

Receiver's goal:

Is the message $m' \in \mathcal{N}$?

RX

S3-3

Fig. 3

Fig. 4

Fig. 5

EP 3 937 117 B1